# EUROPEAN PATENT SPECIFICATION

(11) **EP 2 209 720 B1**
(45) Date of publication and mention of the grant of the patent: **21.11.2012**
(21) Application number: 08850090.5
(22) Date of filing: 02.10.2008
(51) Int. Cl.: B32B 29/00, B65D 3/26, B65D 3/22

(54) **COMPOSITE DOUGH CAN RECYCLABLE AS AN ALL-PAPER PRODUCT**
ALS REINES PAPIERPRODUKT WIEDERVERWERTBARE TEIGVERBUNDDOSE
BOITE A PATE COMPOSITE RECYCLABLE COMME UN PRODUIT TOUT EN PAPIER

(30) Priority: 13.11.2007 US 985169
(43) Date of publication of application: 28.07.2010
(73) Proprietor: Sonoco Development, Inc., Hartsville, South Carolina 29550 (US)
(72) Inventor: SINS, Veronique, 850 Grimbergen (BE)
(74) Representative: Kinsler, Maureen Catherine
(86) International application number: PCT/US2008/078521
(87) International publication number: WO 2009/064547

(56) References cited:
- AU-A- 3 019 967
- GB-A- 1 219 977
- US-A- 5 076 440
- US-A- 5 251 809
- US-A- 5 494 215
- US-A1- 2006 159 877

## Description

### BACKGROUND OF THE INVENTION

The invention relates to composite cans for containing refrigerated dough, consisting of a paperboard body and an Impervious liner having both paper and non-paper components.

A conventional dough can has a paperboard body and a liner that includes non-paper materials such as polymer film and aluminum foil. As an example, US 2008159877 describes a non-foil-based liner for composite containers has a two-ply construction, comprising a paper outer ply adapted to be adhered to an inner surface of a body wall of a composite container, and an inner ply laminated to the paper outer ply by an intervening tie layer. The inner ply comprises a polymer film core layer having an outer surface and an inner surface, a vapor-deposited metal layer joined to the outer surface of the film core layer, and a sealant layer disposed on the inner surface of the film core layer. Other examples of cans with paperboard bodies and non-paper liners are described In US 5,076,440; US 5,251,809; US 5,494,215; AU 3019967 and GB 1219977.

Typically, In a conventional dough can, about 8% to 10% of the can's total weight consists of the non-paper materials. In some jurisdictions such as Europe, there are increasingly stringent regulations on packaging, whereby packaging that has more than 5% non- paper material by weight is not considered to be recyclable paper and thus is taxed more heavily than packaging that has less than 5% non-paper material.

It was desired to develop a dough can that meets all of the usual requirements for dough cans (i.e., adequate barrier performance against moisture and gas migration through the can wall, sufficient strength to maintain integrity of the can and resist the internal pressure bulld-up as the dough expands in the can, and ease and safety of opening of the can), while containing less than 5% by weight non-paper material. This required the non-paper material content to be reduced by an amount equal to 3% of the total can weight. While 3% does not appear to be a significant amount, it represents a large percentage of the non-paper material; more specifically. 3% out of the current 8% Is approximately 38% by which the weight of the non-paper material would have to be reduced, assuming the same paperboard body were used. Accordingly, achieving the less than 5% non-paper material objective proved to be a challenge.

### BRIEF SUMMARY OF THE DISCLOSURE

According to the present invention, there is provided a composite container for refrigerated as defined in claim 1. Some preferred features are defined in the dependent claims.

The composite container can include an outer label wrapped about and adhered to the outer surface of the paperboard body ply. Preferably, the label is adhered in a manner allowing the label to be removed and recycled in a separate waste stream from the rest of the container. Accordingly, the label can be non- paper without impacting the recyclability of the container.

### BRIEF DESCRIPTION OF THE SEVERAL VIEWS OF THE DRAWING(S)

Having thus described the disclosure in general terms, reference will now be made to the accompanying drawings, which are not necessarily drawn to scale, and wherein:
FIG. 1 is a perspective view of an easy-open container provided according to one preferred embodiment of the invention;
FIG. 2 is a perspective view of the easy-open container of FIG. 1, illustrating removal of the portion of the outer label covering the easy-open joint;
FIG. 3 is a greatly enlarged fragmentary sectional view taken along line 3-3 of FIG. 1;
FIG. 4 is a greatly enlarged fragmentary sectional view showing details of the liner of the container, in accordance with one embodiment of the invention;

### DETAILED DESCRIPTION OF THE DRAWINGS

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

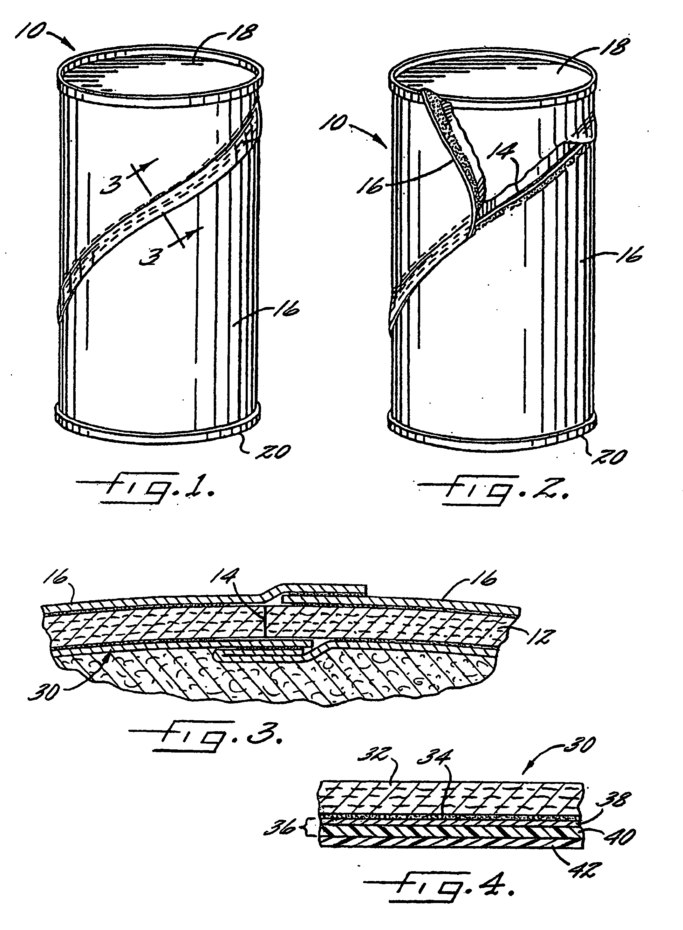

FIGS. 1 and 2 illustrate one embodiment of an easy-open container **10** provided according to the invention, and FIG. 3 is a cross-sectional view through a portion of the container wall. The container **10** is of substantially cylindrical form. The primary structural member of the container is a paperboard body ply **12** that is helically wound about an axis to form a tubular container body. Opposite edges of the body ply **12** are abutted (either to form a butt joint as shown in FIG. 3 or to form an overlap joint, not shown) but are unattached to each other so as to form a separable or "easy-open" joint **14** that extends helically along the container body. A helically wound outer label **16** is wound about the outer surface of the body ply **12** and is adhered thereto with a suitable adhesive that allows the label (or at least a portion thereof) to be peeled away from the body ply when it is desired to open the container. The label serves the important function (in addition to providing a suitable surface for printing of text and graphics describing the contained product) of keeping the joint **14** from prematurely separating during shipping and storage of the container. The label **16** can be constructed of any of various flexible sheet materials such as paper (e.g., kraft), plastic film, film/foil laminates, paper/foil laminates, paper/film laminates, and the like. A top end closure **18** and a bottom end closure **20** are provided on the opposed ends of the container.

The body ply **12** is advantageously composed of a conventional paperboard or boardstock composed of kraft or recycled paper and having a basis weight of about 450 to 500 grams per square meter (gsm). Boardstock conventionally used in the manufacture of spiral wound containers is commercially available from various manufacturers including Sonoco Products Corporation. In some instances, the boardstock can include a weak exterior layer, for example, a 0.003 inch thick exterior news layer.

A liner ply **30** is adhered to the inner surface of the paperboard body ply **12.** The liner ply is a barrier-type, flexible sheet material formed as a laminate that includes a paper layer (e.g., a kraft layer) and at least one non-paper layer imparting barrier and sealing characteristics to the liner. The liner ply prevents the transmission of liquids, oils, and gases into or out of the container wall. The paper layer of the liner ply is adhered directly to the inner surface of the body ply **12** using a suitable adhesive.

As noted, an objective of the present invention was to reduce the weight of the non-paper components of the liner **30** such that the non-paper materials do not exceed 5% of the combined weight of the body ply **12** and liner ply **30.** In a typical conventional dough can, the non-paper materials (typically including an aluminum foil layer serving as a barrier layer and a polymer layer serving as a sealant layer) constitute about 8% of the combined weight. Thus, to meet the objective, it was required to reduce the weight of the non-paper materials by about 38%, while not compromising any of the aforementioned functions required of the liner ply.

A liner ply construction that achieves this objective, in accordance with one embodiment of the invention, is shown in FIG. 4. The liner ply **30** includes a paper layer **32** (e.g., a kraft layer) having a basis weight of 30 to 35 gsm. An adhesive layer **34** is applied to an inner surface of the paper layer such that the adhesive layer has a basis weight of 1.0 to 2.0 gsm. A barrier layer in the form of a metallized polymer film **36** is adhered via the adhesive layer **34** to the inner surface of the paper layer **32.** The metallized film **36** comprises a polymer film **40** having one surface coated with a sub-micron thick layer **38** of a substantially pure metal (e.g., aluminum) in non-oxide form. The polymer film **40** can be an oriented polypropylene (OPP) film. The metal layer **38** can be deposited by a vacuum deposition process as known in the art. The metallized film **36** preferably has a total thickness of 8 to 15 µm, and more preferably 10 to 12 µm. The liner ply further includes a layer **42** of a polyolefin such as polyethylene as a sealant layer that forms the innermost surface of the liner. The sealant layer **42** gives the liner ply the ability to seal to itself to form an overlap joint between opposite edges of the liner ply as shown in FIG. 3. The sealant layer **42** has a basis weight of 8 to 12 gsm.

Thus, as a general proposition, the invention in one aspect entails selecting the basis weights of the body ply 12, the paper layer (32, 132, 232, 332, 432) of the liner, and the non-paper layers of the liner, such that the total weight of the paper material, (*BP* + *PL*)*,* divided by the total weight of all materials, (*BP* + *PL* + *NP),* is at least 0.95, where *BP* is the weight of the body ply, *PL* is the weight of the paper layer of the liner, and *NP* is the weight of the non-paper layer(s) of the liner. With any of the above-described liner ply structures, or variations thereof that would be apparent to those skilled in the art, the weight of the non-paper materials in the container (body ply and liner ply) is no more than 5% of the combined body ply plus liner ply weight, when the liners are combined with a body ply 12 having a basis weight of 450 to 500 gsm.

The liner structures described above also have satisfactory barrier properties. In particular, it is generally desirable for the liner ply to have a moisture vapor transmission rate (MVTR) of not more than 0.2 g/100 in²/day and an oxygen transmission rate (OTR) of not more than 0.2 cc/100 in²/day, more preferably an MVTR of not more than 0.1 g/100 in²/day and an OTR of not more than 0.1 cc/100 in²/day.

In use of composite containers made in accordance with the above description, once the containers have served their original purpose and have been emptied of their contents, the containers can be recycled. Advantageously, in many recycling jurisdictions, the containers can be treated as all-paper articles because they contain less than 5% by weight of non-paper materials. When the label 16 comprises paper, the label can be left on the container, if it has not already been removed during the process of opening the container. If the label comprises more than a negligible amount of non-paper material, then the label (or at least a majority thereof) can be removed prior to recycling the container, if necessary. The label can be recycled in a separate waste stream.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A composite container (10) for refrigerated dough, comprising:
a paperboard body ply (12) wrapped helically about an axis to form a tubular container body, with opposite edges of the paperboard body ply (12) being abutted but unattached so as to form a separable joint (14) that extends helically about the container body, the container body having an inner surface formed by one side of the paperboard body ply (12) and an outer surface formed by an opposite side of the paperboard body ply, wherein the paperboard body ply (12) is a single layer of paperboard having a basis weight BP of 450 to 500 grams per square meter, and
a liner adhered to the inner surface of the container body, the liner being formed by a liner ply (30) wound helically about the axis with opposite edges of the liner ply (30) being overlapped end attached to each other, the liner ply (30) having:
a paper layer (32) having an outer surface adhered to the inner surface ot the container body, the paper layer (32) having a weight PL of 30 to 35 grams per square meter, and
non-paper layers comprising a barrier layer comprising a metallized polymer film (36) for imparting moisture/gas barrier characteristics, the metallised film being adhered to the paper layer (32) and having a thickness of 8 to 15 µm, and a polyolefin sealant layer (42) having a weigh of 8 to 12 grams per square meter, the non-paper layers of the liner having a total weight of *NP*,
wherein the weights of the paperboard body ply (12) and the paper and non-paper layers of the liner are selected such that (*BP* + *PL*) divided by (*BP* + *PL* + *NP*) is at least 0.95,

2. The composite container (10) of claim 1 wherein the non-paper layers of the liner consist of the barrier layer, the polyolefin sealant layer (42) and an adhesive layer applied to an inner surface of the paper layer (32) and having a weight of AL, wherein the barrier layer has an outer surface adhered to the adhesive layer and a weight of BL, and the polyolefin sealant layer (42) is adhered to an inner surface of the barrier layer and has a weight of SL: wherein the weights of the paperboard body ply (12) and the layers of the liner are selected such that (BP+PL) divided by (BP+PL+AL+BL+SL) is at least 0.95.

3. The composite container (10) of claim 2, wherein the metallised polymer film (36) of the barrier layer is metallized with a vacuum-deposited costing of a substantially pure metal in non-oxide form, the barrier layer having a thickness of about 10 to 12 µm.

4. The composite container (10) of claim 3, wherein the polymer film of the barrier layer is oriented polypropylene.

5. The composite container (10) of claim 4, wherein the polyolefin sealant layer has a thickness of about 10 to 15 µm.

## Patentansprüche

1. Verbundwerkstoff-Behälter (10) für tiefgekühlten Teig, wobei der Behälter Folgendes umfasst:
eine Pappe-Korpusschicht (12), die spiralförmig um eine Achse gewickelt ist, um einen röhrenförmigen Behälterkorpus zu bilden, wobei entgegengesetzte Kanten der Pappe-Korpusschicht (12) aneinandergestoßen, aber unbefestigt sind, um so eine trennbare Fuge (14) zu bilden, die sich spiralförmig um den Behälterkorpus erstreckt, wobei der Behälterkorpus eine Innenfläche, die durch eine Seite der Pappe-Korpusschicht (12) gebildet wird, und eine Außenfläche, die durch eine entgegengesetzte Seite der Pappe-Korpusschicht gebildet wird, hat, wobei die Pappe-Korpusschicht (12) eine einzelne Lage aus Pappe ist, die ein Grundgewicht BP von 450 bis 500 Gramm pro Quadratmeter hat, und
eine Auskleidung, die an die Innenfläche des Behälterkorpus geklebt ist, wobei die Auskleidung durch eine Auskleidungsschicht (30) gebildet wird, die spiralförmig um die Achse gewickelt ist, wobei entgegengesetzte Kanten der Auskleidungsschicht (30) überlappt und aneinander befestigt sind, wobei die Auskleidungsschicht (30) Folgendes hat:
eine Papierlage (32), die eine Außenfläche hat, die an der Innenfläche des Behälterkorpus angeklebt ist, wobei die Papierlage (32) ein Gewicht PL von 30 bis 35 Gramm pro Quadratmeter hat, und
Nicht-Papierlagen, die eine Sperrlage, die eine metallisierte Polymerfolie (36) umfasst, um Feuchtigkeits-/Gassperreigenschaften zu verleihen, wobei die metallisierte Folie an die Papierlage (32) geklebt ist und eine Dicke von 8 bis 15 µm hat, und eine Polyolefin-Abdichtungslage (42), die ein Gewicht von 8 bis 12 Gramm pro Quadratmeter hat, umfassen, wobei die Nicht-Papierlagen der Auskleidung ein Gesamtgewicht von NP haben,
wobei die Gewichte der Pappe-Korpusschicht (12) und der Papier- und der Nicht-Papierlagen der Auskleidung derart ausgewählt sind, dass (BP + PL) dividiert durch (BP + PL + NP) wenigstens 0,95 beträgt.

2. Verbundwerkstoff-Behälter (10) nach Anspruch 1, wobei die Nicht-Papierlagen der Auskleidung aus der Sperrlage, der Polyolefin-Abdichtungslage (42) und einer Klebstofflage, die auf eine Innenfläche der Papierlage (32) aufgebracht ist und ein Gewicht von AL hat, bestehen, wobei die Sperrlage eine Außenfläche, die an die Klebstofflage geklebt ist, und ein Gewicht von BL hat und die Polyolefin-Abdichtungslage (42) an eine Innenfläche der Sperrlage geklebt ist und ein Gewicht von SL hat, wobei die Gewichte der Pappe-Korpusschicht (12) und der Lagen der Auskleidung derart ausgewählt sind, dass (BP + PL) dividiert durch (BP + PL + AL + BL + SL) wenigstens 0,95 beträgt.

3. Verbundwerkstoff-Behälter (10) nach Anspruch 2, wobei die metallisierte Polymerfolie (36) der Sperrlage mit einer vakuumaufgedampften Beschichtung aus einem im Wesentlichen reinen Metall in Nicht-Oxidform metallisiert ist, wobei die Sperrlage eine Dicke von etwa 10 bis 12 µm hat.

4. Verbundwerkstoff-Behälter (10) nach Anspruch 3, wobei die Polymerfolie der Sperrlage gerecktes Polypropylen ist.

5. Verbundwerkstoff-Behälter (10) nach Anspruch 4, wobei die Polyolefin-Abdichtungslage eine Dicke von etwa 10 bis 15 µm hat.

## Revendications

1. Récipient composite (10) pour de la pâte réfrigérée, comprenant:
une nappe de corps en carton (12) enroulée de manière hélicoïdale autour d'un axe pour former un corps de récipient tubulaire, les bords opposés de la couche de corps en carton (12) butant l'un contre l'autre, mais n'étant pas fixés, de sorte à former un joint séparable (14) s'étendant de manière hélicoïdale autour du corps du récipient, le corps du récipient comportant une surface interne formée par un côté de la couche du corps en carton (12) et une surface externe formée par un côté opposé de la couche du corps en carton, la couche de corps en carton (12) étant constituée par une seule couche de carton ayant un poids de base BP compris entre 450 et 500 grammes par mètre carré ; et
un revêtement adhérant sur la surface interne du corps du récipient, le revêtement étant formé par une nappe de revêtement (30) enroulée de manière hélicoïdale autour de l'axe, les bords opposés de la nappe de revêtement (30) se chevauchant mutuellement et étant fixés l'un à l'autre, la nappe de revêtement (30) comportant:
une couche de papier (22), comportant une surface externe adhérant sur la surface interne du corps du récipient, la couche de papier (32) ayant un poids PL compris entre 30 et 35 grammes par mètre carré ; et
des couches non composées de papier, comprenant une couche de barrière composée d'un film polymère métallisé (36) pour conférer des caractéristiques de barrière contre l'humidité/les gaz, le film métallisé adhérant sur la couche de papier (32) et ayant une épaisseur comprise entre 8 et 15 µm, et une couche d'étanchéité de polyoléfine (42), ayant un poids compris entre 8 et 12 grammes par mètre carré, les couches non composées de papier ayant un poids total de NP;
les poids de la nappe de corps en carton (12) ainsi que des couches en papier et non composées de papier du revêtement étant sélectionnés de sorte que la valeur de (BP+PL) divisée par (BP + PL + NP) correspond au moins à 0,95.

2. Récipient composite (10) selon la revendication 1, dans lequel les couches non composées de papier du revêtement comprennent la couche de barrière, la couche d'étanchéité de polyoléfine (42) et une couche adhésive appliquée sur une surface interne de la couche de papier (32) et ayant un poids de AL, la couche de barrière comportant une surface externe adhérant sur la couche adhésive et ayant un poids de BL, et la couche d'étanchéité de polyoléfine (42) adhérant sur une surface interne de la couche de barrière et ayant un poids de SL ; les poids de la nappe de corps en carton (12) et des couches de revêtement étant sélectionnés de sorte que la valeur de (BP+ PL) divisée par (BP + PL + AL + BL + SL) correspond au moins à 0,95.

3. Récipient composite (10) selon la revendication 2, dans lequel le film polymère métallisé (36) de la couche de barrière est métallisé avec un revêtement à dépôt sous vide d'un métal pratiquement pur dans une forme de non oxyde, la couche de barrière ayant une épaisseur comprise entre environ 10 et 12 µm.

4. Récipient composite (10) selon la revendication 3, dans lequel le film polymère de la couche de barrière est composé de polypropylène orienté.

5. Récipient composite (10) selon la revendication 4, dans lequel la couche d'étanchéité de polyoléfine a une épaisseur comprise entre environ 10 et 15 µm.
